Europäisches Patentamt

European Patent Office

Office européen des brevets

(19)

(11) Publication number: **0 029 253**
**B1**

# EUROPEAN PATENT SPECIFICATION

(45) Date of publication of patent specification: **29.02.84**

(21) Application number: **80107187.9**

(22) Date of filing: **19.11.80**

(51) Int. Cl.³: **B 01 J 41/08,**
**C 01 D 15/02,**
**C 22 B 26/12, C 22 B 3/00,**
**B 01 J 41/04**

(54) Process for improving the formation of hydrous alumina dispersed within a weak base anion exchange resin and use of the composite prepared for the recovery of Li+ from brine.

(30) Priority: **19.11.79 US 95691**

(43) Date of publication of application:
**27.05.81 Bulletin 81/21**

(45) Publication of the grant of the patent:
**29.02.84 Bulletin 84/9**

(84) Designated Contracting States:
**BE DE FR GB IT NL SE**

(56) References cited:
**US - A - 2 980 497**
**US - A - 4 116 856**
**US - A - 4 116 858**
**US - A - 4 159 311**

**CHEMICAL ABSTRACTS, vol. 88, no. 16, 17th April 1978, page 115, no. 107402b, Columbus, Ohio, U.S.A.**

(73) Proprietor: **THE DOW CHEMICAL COMPANY Dow Center 2030 Abbott Road Post Office Box 1967**
**Midland Michigan 48640 (US)**

(72) Inventor: **Lee, John Malcolm**
**123 Aster Lane**
**Lake Jackson Texas (US)**
Inventor: **Bauman, William Carrel**
**440 West Highway 332**
**Lake Jackson Texas (US)**

(74) Representative: **Casalonga, Alain et al,**
**BUREAU D.A. CASALONGA OFFICE JOSSE & PETIT Baaderstrasse 12-14**
**D-8000 München 5 (DE)**

Courier Press, Leamington Spa, England.

Process for improving the formation of hydrous alumina dispersed within a weak base anion exchange resin and use of the composite prepared for the recovery of LI+ from brine

The present invention relates to the formation of hydrous alumina dispersed within a weak-base anion-exchange resin.

Three U.S. Patent Specifications Bauman et 4,116,858, 4,116,856, and 4,159,311, all relate to the formation of hydrous alumina within a particulate weak-base anion-exchange resin. The hydrous alumina is reacted with LiCl to form crystalline $LiCl \cdot 2Al(OH)_3$, or reacted with LiOH to form crystalline $LiOH \cdot 2Al(OH)_3$. The hydrous alumina is prepared by the ammonia precipitation of $AlCl_3$ dispersed in the anion-exchange resin.

As used herein, the term "weak-base" refers to anion-exchange resins wherein salt forms of the functional amine groups are converted to the $OH^-$ form by $NH_4OH$.

The patents mentioned above describe anion-exchange resins of the weak-base or strong-base varieties and disclose that the neutral halide salt forms of the strong-base resins may be used as the starting material. During the process of precipitating hydrous alumina in the resin by the ammonia precipitation of $AlCl_3$, the halide salt forms of weak-base anion-exchange resins are converted to the $CH^-$ form. Anion-exchange resins can have functional amine groups which are substantially all of the weak-base variety, some which are substantially all of the strong-base variety, and some which contain both varieties. This invention relates only to anion-exchange resins which contain any groups of the weak-base variety as the term "weak base" is defined above.

It has been found that the amount of hydrous alumina which may be incorporated into the resin by the ammonia precipitation of Al halide is limited in any one step by the maximum solubility of Al halide and the free volume in the resin. The ammonia treatment also converts the weak-base resin to the $OH^-$ form, which is approximately only 80 percent of the volume of the halide form and thus there is less volume available to imbibe more Al halide solution.

It would thus be desirable to be able to introduce greater amounts of aluminum halide into the resin.

The defect mentioned above has been substantially removed by the present invention, which is a process for introducing additional amounts of $Al(OH)_3$ in the reticules of a weak-base anion-exchange resin by the in situ ammonia precipitation of Al halide in aqueous media, thereby forming a composite of anion-exchange resin having $Al(OH)_3$ dispersed therein, characterized by:

(1) acidifying the said composite in an aqueous medium with HX, where X is chlorine, bromine, iodine or fluorine, sufficient to provide a pH of not lower than about 5.0, thereby converting the anion-exchange resin to the halide salt form;

(2) separating the composite from the aqueous portion;

(3) flooding the composite with an aqueous solution of Al halide, draining the excess solution; and

(4) adding $NH_4OH$ to precipitate additional $Al(OH)_3$ in the resin.

By the present invention, the OH form of the resin is converted to the halide form without solubilizing the $Al(OH)_3$ in the resin. This permits additional amounts of Al halide to be imbibed and then converted by ammonia treatment to additional amounts of $Al(OH)_3$. The preferred acid halide is HCl and the preferred Al halide is $AlCl_3$.

The acid halide treatment of the $Al(OH)_3$-containing $OH^-$ resin should be done carefully, taking care that the acid addition is not so rapid that a localized drop in pH to lower than about 5 is reached. Slow addition of acid, with stirring and while monitoring the pH, is recommended. Any convenient method for lowering the pH, by addition of acid halide, may be used so long as the method does not result in solubilizing a substantial amount of the $Al(OH)_3$ which is already in the resin.

The acid halide treatment step is beneficially aided and speeded by the addition of ammonium halide, especially $NH_4Cl$. The amount of $NH_4Cl$ added may be over a fairly broad range, with about 5—25 percent aqueous strength of $NH_4Cl$ being particularly beneficial. Other amine hydrochlorides may be used, but $NH_4Cl$ is preferred. The ammonium halide acts as a buffer against localized over-acidification during the acid halide addition, thereby allowing faster addition of the acid halide. The ammonium halide added initially, prior to the acid halide addition, may be mostly removed when the resin is drained before· addition of more Al halide. Then when $NH_4OH$ is added to convert Al halide to $Al(OH)_3$, more ammonium halide is formed.

HCl is the most appropriate acid to use if one intends to convert the hydrous alumina, $Al(OH)_3$, to $LiCl \cdot 2Al(OH)_3$. However, if one intends to convert to $LiX \cdot 2Al(OH)_3$, where X is a different halogen than chlorine, then it is recommended that the corresponding acid halide be used and that the corresponding ammonium halide be used, thus avoiding a mixture of halo compounds.

The temperature for use with the HCl or the $NH_4Cl/HCl$ treatment should be in the range of about 20°C to about 100°C, preferably about 45°C to about 100°C. If higher temperatures are desired so as to speed the treatment, superatmospheric pressures may be needed to avoid substantial loss of ingredients through vaporization.

It appears that the HCl or $NH_4Cl/HCl$ treatment swells the resin, thereby permitting further sequential treatment steps, thus providing for appreciable increases in the aluminum content of the resin. As much as a three-fold increase or more in the Al content of the resin is readily attained. By this increase in the Al content in the resin (first as hydrous alumina and then as $LiX \cdot 2Al(OH)_3$), the composite has greater capacity for recovering $Li^+$ values from brines and a more efficient $Li^+$ recovery process is attained. The higher loading of aluminate in the resin permits greater concentration of LiX in the effluent of the exchange column when recovering $Li^+$ from brines.

We have also found that the formation of crystalline $LiX \cdot 2Al(OH)_3$, formed by heating LiX (where X is $Cl^-$ or $OH^-$) within the resin/$Al(OH)_3$ composite, is enhanced by performing the heating at high pH of, say, about 11 to about 11.5 which is done in a metal (non-glass) container to avoid heating the highly alkaline mixture in glass. Heating of highly alkaline mixtures in glass can result in minute amounts of lithium silicate which can interface to some extent with the formation of highly crystalline $LiX \cdot 2Al(OH)_3$.

The following examples illustrate the invention.

For purposes of comparison, the same resin is employed in each of the following examples. This resin is a particulate, macroporous anion-exchange resin comprising a styrene-divinylbenzene cross-linked polymer having pendant tertiary amine groups.

Example 1

A portion of the above resin is flooded with a concentrated aqueous solution of aluminum chloride, dried until it is freely flowing, and then treated with ammonium hydroxide to cause precipitation of aluminum hydroxide dispersed within the resin. Ammonium chloride, ammonium hydroxide and aluminum hydroxide are washed out, leaving the resin in $OH^-$ form containing the $Al(OH)_3$ dispersed therein. At this point the resin contains about 1.1 millimole per cubic centimeter of Al per cc of dry resin in the base form.

The resin preparation in the dried form is screened and 223.58 g of −30 mesh (−0.36 mm) beads are further treated in the following manner: enough water is added to make a slurry, which is stirred from above with a paddle blade stirrer. About 40 g of $NH_4Cl$ is stirred into the slurry; the temperature is raised to about 80—95°C and 750 meq of HCl are slowly added, during which the pH is not permitted to go lower than pH 5.

After all the acid is in, the pH remains at 5.2. Yield is 645 ml of resin. After the product is well washed with water and drained dry to 460.3 g, a saturated solution of $AlCl_3$ (200 cc) is added to the resin with stirring, then 20 g of $AlCl_3$ additional is added. After the exotherm begins to decrease, the resin is filtered. The filtrate has a specific gravity of 1.28. The product resin is dried in a dry nitrogen stream to a weight of 476.8 g. The dried material is slurried in 380 cc of 30 percent $NH_4OH$ and the resulting exotherm allowed to decrease. After stirring for one-half hour, the solids are washed well by decanting the $Al(OH)_3$ which forms outside of the resin. The washed resin is reslurried in water and heated. Again, $NH_4Cl$ and 720 meq of HCl are added to again attain slight acidity not lower than pH 5. The washed resin volume is 640 cc after drying back to 507.3 g. Then 250 cc of saturated $AlCl_3$ solution and 83 g of anhydrous $AlCl_3$ are stirred with the resin, then allowed to stand overnight.

The resin is filtered to a weight of 563.3 g and the damp-dry resin slurried in 380 cc of 30 percent $NH_4OH$. After washing, the volume of product is now 580 cc.

About 500 cc of the resin are then added to excess 35 percent $AlCl_3$ solution, slurried, then filtered and dried in a $N_2$ stream to 446.8 g. The dry resin then is slurried in 300 ml of 30 percent $NH_4OH$. After washing thoroughly to remove external $Al(OH)_3$, the resin volume is 450 ml. Each ml contains about 3.33 millimole of Al.

Fifty grams of LiCl and saturated NaCl brine (low Ca and Mg) are added to volume of 750 ml and warmed to 68°C. The pH is 7.75. After cooling 20 hours, the slurry is heated to boiling and 250 meq NaOH added slowly to pH 8.5. The resin, a $LiX \cdot 2Al(OH)_3$ composite, is filtered and put in a metal beaker at 95°C in the oven for 24 hours. Then 40 g $NH_4Cl$ are added and heated with stirring as 722 meq of HCl are added to give pH 5 at 90°C. The Al content is now about 3.1 millimole per cubic centimeter of resin. Yield is 470 cc of resin composite.

A 118 cc sample of the resin is tested in a temperature controlled, jacketed column. A lithium-containing brine from Arkansas is passed through at 20 cc per minute and 90°C until the effluent is the same as the influent with respect to $Li^+$. Water containing 60 ppm $Li^+$ is passed through at 3.08 cc per minute and 90°C and the effluent collected. The first cut is 50 cc; all others are 10 cc. The analysis by flame photometer shows in milligrams of $Li^+$ per liter:

Cut    4—740
       5—5000    (taking #5, 6, 7, the
       6—7650    average LiCl content is
       7—6800    3.97 percent, or about 20
       8—3266    times the loading brine)
       9—2450

Example 2

Following the method employed in Example 1, it is found that the multiple precipitations of

AI(OH)$_3$ in the anion-exchange resin, prior to reaction with LiCl to form crystalline LiCl · 2Al(OH)$_3$, is beneficial in giving increased strength of Li$^+$ in the effluent from the Li$^+$ recovery process than is a single precipitation, such as is shown in the patent specifications mentioned on page 1. Data are shown below:

| Precipitations of Al(OH)$_3$ | Al loading in resin (mmole Al/cc resin) | Conc. Li$^+$ in effluent Mg Li$^+$/liter (peak) |
|---|---|---|
| single* | ~1.2 | 3000 |
| multiple | 2.0 | 4000 |
| multiple | 3.0 | 5200 |
| multiple | 4.0 | 6200 |

* For comparison purposes with patent specifications mentioned on page 1.

## Claims

1. A process for introducing additional amounts of Al(OH)$_3$ in the reticules of a weak-base anion-exchange resin by the in situ ammonia precipitation of Al halide in aqueous media, thereby forming a composite of anion-exchange resin having Al(OH)$_3$ dispersed therein, characterized by:

acidifying the said composite in an aqueous medium with HX, where X is chlorine, bromine, iodine or fluorine, sufficient to provide a pH of not lower than about 5.0, thereby converting the anion-exchange resin to the halide salt form;
separating the composite from the aqueous portion;
flooding the composite with an aqueous solution of Al halide, draining the excess solution; and
adding NH$_4$OH.

2. A process as in Claim 1 wherein HX is hydrochloric acid and the aluminum halide is aluminum chloride.

3. The process of Claim 1 wherein ammonium halide is added before or during the acidification step.

4. The process of Claim 3 wherein the ammonium halide is ammonium chloride.

5. The process of Claim 4 wherein the amount of ammonium halide is in the range of 5 percent to 25 percent of the aqueous portion.

6. The process of Claim 1 wherein steps 1 through 4 are repeated one or more times.

7. The process of Claim 1 wherein the acidification in step 1 is performed in the temperature range of 20°C to 100°C.

8. The process of Claim 1 wherein the acidification in step 1 is performed in the range of 45°C to 100°C.

9. Use of the composite obtained by the process according to Claims 1 to 8 for the manufacture of crystalline LiOH · 2Al(OH)$_3$ and/or LiCl · 2Al(OH)$_3$ by treating the composite in aqueous media at elevated temperature with LiOH and/or LiCl.

10. Use according to Claim 9 wherein any crystalline LiOH · 2Al(OH)$_3$ is converted to crystalline LiCl · 2Al(OH)$_3$ by being contacted with acidic LiCl.

11. A process for recovering Li$^+$ from brine by the use of a composite comprising an ionexchange resin having dispersed therein crystalline LiCl · 2Al(OH)$_3$, characterized by the use of the composite prepared in accordance with Claim 9 or 10.

## Patentansprüche

1. Verfahren zum Einbau zusätzlicher Mengen von Al(OH)$_3$ in das Netzwerk eines schwach-basischen Anionaustauscherharzes durch die Ammoniakausfällung von Al-Halogeniden in einem wässrigen Medium in situ, wobei sich eine Zusammensetzung eines Anionaustauscherharzes mit darin verteiltem Al(OH)$_3$ bildet, dadurch gekennzeichnet, daß

(1) die genannte Zusammensetzung in einem wässrigen Medium mit HX gesäuert wird, wobei X Chlor, Brom, Jod oder Fluor ist, und in ausreichender Menge eingesetzt wird, um einen pH von nicht unter etwa 5,0 zu erzeugen, und somit das Anionaustauscherharz in die Halogenidsalzform überführt;
(2) die Zusammensetzung vom wäßrigen Teil abgetrennt wird;
(3) die Zusammensetzung mit einer wässrigen Lösung von Al-Halogeniden gespült und somit die überschüssige Lösung abgeführt wird;
(4) NH$_4$OH zugesetzt wird.

2. Verfahren gemäß Anspruch 1, wobei HX Salzsäure ist und das Aluminiumhalogenid Aluminiumchlorid ist.

3. Verfahren gemäß Anspruch 1, wobei vor oder während der Säuerung Ammoniumhalogenid zugesetzt wird.

4. Verfahren gemäß Anspruch 3, wobei das Ammoniumhalogenid Ammoniumchlorid ist.

5. Verfahren gemäß Anspruch 4, wobei die Menge Ammoniumhalogenid im Bereich 5 bis 25% des wässrigen Anteils liegt.

6. Verfahren gemäß Anspruch 1, wobei die Schritte 1 bis 4 einmal oder mehrere Male wiederholt werden.

7. Verfahren gemäß Anspruch 1, wobei die Säuerung in Schritt 1 im Temperaturbereich 20 bis 100°C ausgeführt wird.

8. Verfahren gemäß Anspruch 1, wobei die Säuerung in Schritt 1 im Temperaturbereich 45 bis 100°C ausgeführt wird.

9. Anwendung der mit dem Verfahren gemäß Ansprüchen 1—8 erhaltenen Zusammensetzung zur Herstellung von kristallinem LiOH · 2Al(OH)$_3$ und/oder LiCl · 2Al(OH)$_3$ durch

Behandlung der Zusammensetzung im wässrigen Medium mit LiOH und/oder LiCl bei erhöhter Temperatur.

10. Anwendung gemäß Anspruch 9, wobei beliebiges kristallines $LiOH \cdot 2Al(OH)_3$ durch Kontakt mit saurem LiCl in kristallines $LiCl \cdot 2Al(OH)_3$ überführt wird.

11. Verfahren zur Wiedergewinnung von Li aus Solwasser durch Anwendung einer Zusammensetzung enthaltend ein Ionenaustauscherharz mit darin dispers verteiltem kristallinem $LiCl \cdot 2Al(OH)_3$ gekennzeichnet durch den Einsatz der gemäß Anspruch 9 oder 10 hergestellten Zusammensetzung.

## Revendications

1. Procédé pour introduire des quantités supplémentaires de $Al(OH)_3$ dans les réticules d'une résine échangeuse d'anions faiblement basique par la précipitation in situ de l'halogénure de Al par l'ammoniaque, en milieux aqueux, formant ainsi un produit composite de résine échangeuse d'anions contenant dispersé $Al(OH)_3$, caractérisé par:

l'acidification dudit produit mixte dans un milieu aqueux avec HX, où X est le chlore, le brome, l'iode ou le fluor, en quantité suffisante pour avoir un pH qui ne soit pas inférieur à environ 5, convertissant ainsi la résine échangeuse d'anions en la forme de sel halogénure;
la séparation de la résine composite avec la partie aqueuse;
la submersion de la résine composite avec une solution aqueuse d'halogénure de Al, le drainage de la solution en excès; et
l'addition de $NH_4OH$.

2. Procédé selon la revendication 1, dans lequel HX est l'acide chlorhydrique et l'halogénure d'aluminium est le chlorure d'aluminium.

3. Procédé selon la revendication 1, dans lequel un halogénure d'ammonium est ajouté avant ou pendant le stade de l'acidification.

4. Procédé selon la revendication 3, dans lequel l'halogénure d'ammonium est le chlorure d'ammonium.

5. Procédé selon la revendication 4, dans lequel la quantité d'halogénure d'ammonium est comprise entre 5% et 25% de la partie aqueuse.

6. Procédé selon la revendication 1, dans lequel les stades 1 à 4 sont répétés 1 ou plusieurs fois.

7. Procédé selon la revendication 1, dans lequel l'acidification dans le stade 1 est effectuée dans la gamme de température allant de 20°C à 100°C.

8. Procédé selon la revendication 1, dans lequel l'acidification dans le stade 1 est effectuée entre 45°C et 100°C.

9. Utilisation de la résine composite obtenue par le procédé selon les revendications 1 à 8, pour la préparation de $LiOH \cdot 2Al(OH)_3$ et/ou de $LiCl \cdot 2Al(OH)_3$ cristallisés par traitement de la résine composite en milieux aqueux, à température élevée, avec LiOH ou LiCl.

10. Utilisation selon la revendication 9, dans lequel un quelconque $LiOH \cdot 2Al(OH)_3$ cristallisé est converti en $LiCl \cdot 2Al(OH)_3$ cristallisé par la mise en contact avec LiCl acide.

11. Procédé pour récupérer $Li^+$ de saumures en utilisant une résine composite comprenant une résine échangeuse d'ions contenant dispersé $LiCl \cdot 2Al(OH)_3$, caractérisé par l'utilisation de la résine composite préparée selon les revendications 9 ou 10.